# EUROPEAN PATENT APPLICATION

(11) **EP 4 340 428 A1**
(43) Date of publication of application: **20.03.2024**
(21) Application number: 21941880.3
(22) Date of filing: 12.05.2021
(51) Int. Cl.: H04W 16/28, H04W 16/30, H04W 24/10, H04W 4/42

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2021/018047
(87) International publication number: WO 2022/239146

(57) **Abstract**

A terminal according to one aspect of the present disclosure includes a receiving section that receives a downlink reference signal transmitted from a plurality of transmission/reception points, a control section that determines information related to Doppler reporting on the basis of at least one of first information related to a plus Doppler shift and second information related to a minus Doppler shift, the first and second information being obtained from the downlink reference signal, and a transmitting section that transmits the information related to the Doppler reporting. According to one aspect of the present disclosure, it is possible to appropriately receive a downlink signal from a plurality of transmission points.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), it is assumed that in order to achieve radio communication in a moving object (for example, a train or the like) moving at a high speed, a beam transmitted from a transmission point (for example, a Remote Radio Head (RRH)) arranged on a path of the moving object is used.

However, how a terminal receives downlink signals transmitted from a plurality of transmission points has not been fully studied. Unless such operation is definite, throughput reduction or the like may occur.

Thus, an object of the present disclosure is to provide a terminal, a radio communication method, and a base station that appropriately receive downlink signals from a plurality of transmission points.

### Solution to Problem

A terminal according to one aspect of the present disclosure includes a receiving section that receives a downlink reference signal transmitted from a plurality of transmission/reception points, a control section that determines information related to Doppler reporting on the basis of at least one of first information related to a plus Doppler shift and second information related to a minus Doppler shift, the first and second information being obtained from the downlink reference signal, and a transmitting section that transmits the information related to the Doppler reporting. Advantageous Effects of Invention

According to one aspect of the present disclosure, it is possible to appropriately receive a downlink signal from a plurality of transmission points.

### Brief Description of Drawings

[FIG. 1] FIGS. 1A and 1B are each a diagram to show an example of communication between a moving object and a transmission point (for example, an RRH).
[FIG. 2] FIGS. 2A to 2C are diagrams to show an example of scheme 0 to scheme 2 related to an SFN.
[FIG. 3] FIGS. 3A and 3B are diagrams to show an example of scheme 1.
[FIG. 4] FIGS. 4A to 4C are diagrams to show an example of an NW pre-compensation scheme.
[FIG. 5] FIG. 5 is a diagram to show an example of Doppler information according to a first embodiment.
[FIG. 6] FIG. 6 is a diagram to show an example of Doppler compensation according to the first embodiment.
[FIG. 7] FIG. 7 is a diagram to show another example of the Doppler compensation according to the first embodiment.
[FIG. 8] FIGS. 8A and 8B are each a diagram to show an example of Doppler information according to Embodiment 3-1.
[FIG. 9] FIG. 9 is a diagram to show an example of Doppler information according to Embodiment 3-2.
[FIG. 10] FIG. 10 is a diagram to show an example of Doppler information according to Embodiment 3-3.
[FIG. 11] FIG. 11 is a diagram to show an example of a schematic structure of a radio communication system according to one embodiment.
[FIG. 12] FIG. 12 is a diagram to show an example of a structure of a base station according to one embodiment.
[FIG. 13] FIG. 13 is a diagram to show an example of a structure of a user terminal according to one embodiment.
[FIG. 14] FIG. 14 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) in a UE regarding at least one of a signal and a channel (which is expressed as a signal/channel) based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Default TCI State/Default Spatial Relation/Default PL-RS)

In Rel. 16, the PDSCH may be scheduled by using DCI having a TCI field. A TCI state for the PDSCH is indicated by the TCI field. The TCI field in DCI format 1-1 is 3 bits, and the TCI field in DCI format 1-2 is up to 3 bits.

In an RRC connected mode, if first information of TCI in DCI (higher layer parameter "tci-PresentInDCI") is set to "enabled" for a CORESET for scheduling the PDSCH, the UE assumes that the TCI field is present in DCI format 1_1 for a PDCCH transmitted in the CORESET.

If second information of TCI in DCI (higher layer parameter "tci-PresentInDCI-1-2") for a CORESET for scheduling the PDSCH is configured for the UE, the UE assumes that the TCI field having a DCI field size indicated by the second information of TCI in DCI is present in DCI format 1_2 for a PDSCH transmitted in the CORESET.

In Rel. 16, the PDSCH may be scheduled by using DCI not having the TCI field. A DCI format of the DCI may be DCI format 1_0 or DCI format 1_1/DCI format 1_2 in a case where information of TCI in DCI (higher layer parameter "tci-PresentInDCI" or "tci-PresentInDCI-1-2") is not configured (enabled). When the PDSCH is scheduled by using the DCI not having the TCI field, and if time offset between reception of DL DCI (DCI to schedule a PDSCH (scheduling DCI)) and a corresponding PDSCH (PDSCH scheduled by the DCI) is greater than or equal to a threshold value (timeDurationForQCL), the UE assumes that a TCI state or QCL assumption for the PDSCH is the same as a TCI state or QCL assumption for the CORESET (for example, the scheduling DCI) .

In an RRC connected mode, in both a case where information of TCI in DCI (higher layer parameters "tci-PresentInDCI" and "tci-PresentInDCI-1-2") is set to "enabled" and a case where the information of TCI in DCI is not configured, when time offset between reception of DL DCI (DCI to schedule a PDSCH) and a corresponding PDSCH (PDSCH scheduled by the DCI) is less than a threshold value (timeDurationForQCL) (application condition, first condition), a TCI state (default TCI state) for the PDSCH may, in a case of non-cross carrier scheduling, be a TCI state with the lowest CORESET ID in the latest slot in an active DL BWP of that CC (for a specific UL signal). Otherwise, the TCI state (default TCI state) for the PDSCH may be a TCI state with the lowest TCI state ID for a PDSCH in an active DL BWP of a CC to be scheduled.

In Rel. 15, respective ones of a PUCCH spatial relation activation/deactivation MAC CE and an SRS spatial relation activation/deactivation MAC CE are necessary. A PUSCH spatial relation follows an SRS spatial relation.

In Rel. 16, at least one of the PUCCH spatial relation activation/deactivation MAC CE and the SRS spatial relation activation/deactivation MAC CE may not be used.

If both a spatial relation and a PL-RS for a PUCCH are not configured in FR2 (application condition, second condition), default assumption for the spatial relation and the PL-RS (default spatial relation and default PL-RS) is applied to the PUCCH. If both a spatial relation and a PL-RS for an SRS (SRS resource for the SRS or SRS resource corresponding to SRI in DCI format 0_1 to schedule a PUSCH) are not configured in FR2 (application condition, second condition), default assumption for the spatial relation and the PL-RS (default spatial relation and default PL-RS) is applied to the PUSCH scheduled by DCI format 0_1, and the SRS.

If CORESETs are configured in an active DL BWP on that CC (application condition), the default spatial relation and the default PL-RS may be a TCI state or QCL assumption for a CORESET having the lowest CORESET ID in the active DL BWP. If CORESETs are not configured in the active DL BWP on that CC, the default spatial relation and the default PL-RS may be an active TCI state having the lowest ID for a PDSCH in the active DL BWP.

In Rel. 15, a spatial relation for a PUSCH scheduled by DCI format 0_0 follows a spatial relation for a PUCCH resource having the lowest PUCCH resource ID, out of active spatial relations for PUCCHs on the same CC. A network needs to update PUCCH spatial relations on all SCells even when the PUCCH is not transmitted on the SCells.

In Rel. 16, PUCCH configuration for the PUSCH scheduled by DCI format 0_0 is unnecessary. When an active PUCCH spatial relation or a PUCCH resource for the PUSCH scheduled by DCI format 0_0 is absent on an active UL BWP in that CC (application condition, second condition), the default spatial relation and the default PL-RS are applied to the PUSCH.

A condition for application of the default spatial relation/default PL-RS for the SRS may include a case that an information element for enabling a default beam pathloss for the SRS (higher layer parameter "enableDefaultBeamPlForSRS") is set to "enabled." A condition for application of the default spatial relation/default PL-RS for the PUCCH may include a case that an information element for enabling a default beam pathloss for the PUCCH (higher layer parameter "enableDefaultBeamPlForPUCCH") is set to "enabled." A condition for application of the default spatial relation/default PL-RS for the PUSCH scheduled by DCI format 0_0 may include a case that an information element for enabling a default beam pathloss for the PUSCH scheduled by DCI format 0_0 (higher layer parameter "enableDefaultBeamPlForPUSCH0_0") is set to "enabled."

The above-described threshold value may be referred to as a time length (time duration) for QCL, "timeDurationForQCL," "Threshold," "Threshold for offset between a DCI indicating a TCI state and a PDSCH scheduled by the DCI," "Threshold-Sched-Offset," a schedule offset threshold value, a scheduling offset threshold value, or the like.

When offset between reception of DL DCI and a PDSCH corresponding to the DL DCI is less than a threshold value "timeDurationForQCL," at least one TCI state configured for a serving cell with a scheduled PDSCH includes "QCL type D," a parameter for enabling two default TCIs (enableTwoDefaultTCIStates-r16) is configured for the UE, and at least one TCI codepoint indicates two TCI states, the UE assumes that a DMRS port for the PDSCH or PDSCH transmission occasion in the serving cell is QCLed (quasi co-located) with an RS related to a QCL parameter associated with two TCI states corresponding to the lowest codepoint out of TCI codepoints including two different TCI states. The parameter for enabling two default TCIs indicates that Rel-16 operation with two default TCI states for a PDSCH in a case where at least one TCI codepoint is mapped to two TCI states is enabled.

### (Multi-TRP)

For NR, one or a plurality of transmission/reception points (TRPs) (multiple TRPs (multi TRP (MTRP))) that perform DL transmission to a UE by using one or a plurality of panels (multi panel) are under study. The UE that performs UL transmission to one or the plurality of TRPs by using one or a plurality of panels is also under study.

Note that the plurality of TRPs may correspond to the same cell identifier (ID), or may correspond to different cell IDs. The cell ID may be a physical cell ID, or may be a virtual cell ID.

The multiple TRPs (for example, TRP #1 and TRP #2) may be connected to each other by an ideal/non-ideal backhaul, and information, data, and the like may be exchanged. From respective TRPs of the multiple TRPs, different codewords (Code Words. CWs) and different layers may be transmitted. As a mode of multi-TRP transmission, non-coherent joint transmission (NCJT) may be used.

In NCJT, for example, TRP #1 performs modulation mapping and layer mapping for a first codeword to transmit a first number of layers (for example, 2 layers) and to transmit a first PDSCH by using first precoding. TRP #2 performs modulation mapping and layer mapping for a second codeword to transmit a second number of layers (for example, 2 layers) and to transmit a second PDSCH by using second precoding.

Note that a plurality of PDSCHs (multiple PDSCHs) transmitted by NCJT may be defined as PDSCHs partially or fully overlapping with each other in relation to at least one of time and frequency domains. In other words, a first PDSCH from a first TRP and a second PDSCH from a second TRP may overlap with each other in at least one of time and frequency resources.

It may be assumed that these first PDSCH and second PDSCH are not in a quasi-co-location (QCL) relationship (not quasi-co-located). Reception of the multiple PDSCHs may be interpreted as simultaneous reception of PDSCHs other than a certain QCL type (for example, QCL type D).

A plurality of PDSCHs (which may be referred to as multiple PDSCHs) from the multiple TRPs may be scheduled by using one piece of DCI (single DCI, single PDCCH) (single master mode, multiple TRPs based on single DCI (single-DCI based multi-TRP)). A plurality of respective PDSCHs from the multiple TRPs may be scheduled by using a plurality of pieces of DCI (multiple DCI, multiple PDCCHs) (multimaster mode, multiple TRPs based on multiple DCI (multi-DCI based multi-TRP)).

For Ultra-Reliable and Low Latency Communications (URLLC) for multiple TRPs, support for repetition of a PDSCH (transport block (TB) or codeword (CW)) across the multiple TRPs is under study. Support for repetition schemes (URLLC schemes, reliability enhancement scheme, for example, schemes 1a, 2a, 2b, 3, and 4) across the multiple TRPs on a frequency domain, a layer (spatial) domain, or a time domain is under study. In scheme 1a, multiple PDSCHs from the multiple TRPs are space division multiplexed (SDMed). In schemes 2a and 2b, PDSCHs from the multiple TRPs are frequency division multiplexed (FDMed). In scheme 2a, redundancy versions (RVs) for the multiple TRPs are the same. In scheme 2b, the RVs for the multiple TRPs may be the same, or may be different from each other. In schemes 3 and 4, multiple PDSCHs from the multiple TRPs are time division multiplexed (TDMed). In scheme 3, the multiple PDSCHs from the multiple TRPs are transmitted in one slot. In scheme 4, the multiple PDSCHs from the multiple TRPs are transmitted in different slots.

According to such a multi-TRP scenario, more flexible transmission control using a channel with satisfactory quality is possible.

In order to support intra-cell (having the same cell ID) and inter-cell (having different cell IDs) multi-TRP transmissions based on multiple PDCCHs, in RRC configuration information for linking a plurality of pairs of PDCCHs and PDSCHs having multiple TRPs, one control resource set (CORESET) in PDCCH configuration information (PDCCH-Config) may correspond to one TRP.

The UE may judge that the multiple TRPs are multiple TRPs based on multiple DCI when at least one of condition 1 and condition 2 below is satisfied. In this case, the TRPs may be interpreted as CORESET pool indices.

### [Condition 1]

A CORESET pool index with "1" is configured.

### [Condition 2]

Two different values (for example, 0 and 1) of CORESET pool indices are configured.

The UE may judge that the multiple TRPs are multiple TRPs based on single DCI when the following condition is satisfied. In this case, two TRPs may be interpreted as two TCI states indicated by a MAC CE/DCI.

### [Condition]

In order to indicate one or two TCI states for one code point of a TCI field in DCI, an "enhanced TCI state activation/deactivation MAC CE for a UE-specific PDSCH (Enhanced TCI states Activation/Deactivation for UE-specific PDSCH MAC CE)" is used.

DCI for common beam indication may be a UE-specific DCI format (for example, DL DCI format (for example, 1_1 or 1_2) or UL DCI format (for example, 0_1 or 0_2)), or may be a UE-group common DCI format.

### (SFN PDCCH)

With respect to a PDCCH/CORESET defined in Rel. 15, one TCI state without a CORESET pool index (CORESETPoolIndex) (which may be referred to as TRP information (TRP Info)) is configured for one CORESET.

With respect to enhancement of a PDCCH/CORESET defined in Rel. 16, a CORESET pool index is configured for each CORESET in multiple TRPs based on multiple DCI.

For Rel. 17 (or later versions), enhancement 1 and enhancement 2 below related to the PDCCH/CORESET are under study.

In a case where a plurality of antennas (small antennas, transmission/reception points) having the same cell ID form a single frequency network (SFN), up to two TCI states can be configured/activated for one CORESET by using higher layer signaling (RRC signaling/MAC CE) (enhancement 1). The SFN contributes to at least one of management and reliability enhancement of an HST (high speed train).

In PDCCH repetition transmission (which may be simply referred to as "repetition"), two PDCCH candidates in two search space sets are linked to each other, and each search space set is associated with a corresponding CORESET (enhancement 2). The two search space sets may be associated with the same or different CORESETs. One (up to one) TCI state can be configured/activated for one CORESET by using higher layer signaling (RRC signaling/MAC CE).

If the two search space sets are associated with different CORESETs having different TCI states, the transmission may mean multi-TRP repetition transmission. If the two search space sets are associated with the same CORESET (CORESETs with the same TCI states), the transmission may mean single-TRP repetition transmission.

### (HST)

In LTE, arrangement in an HST (high speed train) tunnel is difficult. A large antenna performs transmission to the outside/inside of the tunnel. For example, transmit power of the large antenna is about 1 to 5 W. For handover, it is important for the UE to perform transmission to the outside of the tunnel before entering the tunnel. For example, transmit power of a small antenna is about 250 mW. A plurality of small antennas (transmission/reception points) having the same cell ID and having a distance of 300 m form a single frequency network (SFN). All small antennas in the SFN transmit the same signals at the same time on the same PRB. Assume that a terminal performs transmission/reception for one base station. Actually, the plurality of transmission/reception points transmit identical DL signals. In high-speed movement, transmission/reception points in units of several km form one cell. The handover is performed when the cell is crossed. Therefore, frequency of the handover can be reduced.

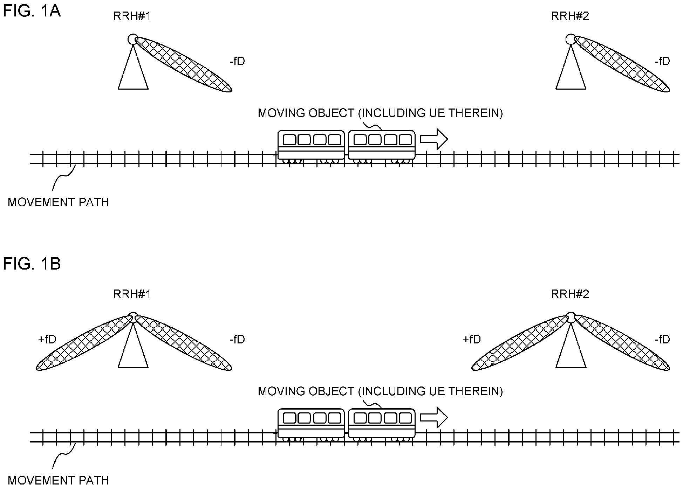

In NR, it is assumed that in order to perform communication with a terminal (also described hereinafter as a UE) included in a moving object (HST (high speed train)), such as a train moving at a high speed, a beam transmitted from a transmission point (for example, an RRH) is used. In existing systems (for example, Rel. 15), communication with the moving object performed by transmitting a uni-directional beam from the RRH is supported (see FIG. 1A).

FIG. 1A shows a case where RRHs are installed along a movement path (or direction of movement, direction of travel, travel path) of the moving object, and where a beam is formed from each RRH towards the direction of travel of the moving object. The RRH to form the uni-directional beam may be referred to as a uni-directional RRH. In an example shown in FIG. 1A, the moving object receives a minus Doppler shift (-f_{D}) from each RRH.

Note that FIG. 1A shows a case where the beam is formed towards the direction of travel of the moving object, but is not limited to this, and the beam may be formed towards a direction opposite to the direction of travel, or the beam may be formed towards any direction regardless of the direction of travel of the moving object.

In Rel. 16 (or later versions), it is also assumed that a plurality of (for example, two or more) beams are transmitted from the RRH. For example, it is assumed that beams are formed towards both a direction of travel of the moving object and the opposite direction (see FIG. 1B).

FIG. 1B shows a case where RRHs are installed along a movement path of the moving object, and beams are formed from each RRH towards both the direction of travel of the moving object and a direction opposite to the direction of travel. An RRH to form a multi-directional (for example, bi-directional) beam may be referred to as a bi-directional RRH.

In the HST, the UE performs communication in a manner similar to that in a single TRP. In base station implementation, transmission from a plurality of TRPs (same cell IDs) can be performed.

In an example shown in FIG. 1B, when two RRHs (here, RRH #1 and RRH #2) use the SFN, a signal in which the moving object receives a minus Doppler shift is switched to a signal in which the moving object receives a plus Doppler shift with higher power, in the middle of the two RRHs. In this case, a maximum width of a Doppler shift change requiring compensation is a change from -f_{D} to +f_{D}, and doubles as compared to that of the uni-directional RRH.

Note that in the present disclosure, the plus Doppler shift may be interpreted as information related to a plus Doppler shift, a Doppler shift in a plus (positive) direction, or Doppler information in a plus (positive) direction. Also, the minus Doppler shift may be interpreted as information related to a minus Doppler shift, a Doppler shift in a minus (negative) direction, or Doppler information in a minus (negative) direction.

Here, as HST schemes, scheme 0 to scheme 2 (HST scheme 0 to HST scheme 2) below are compared to each other.

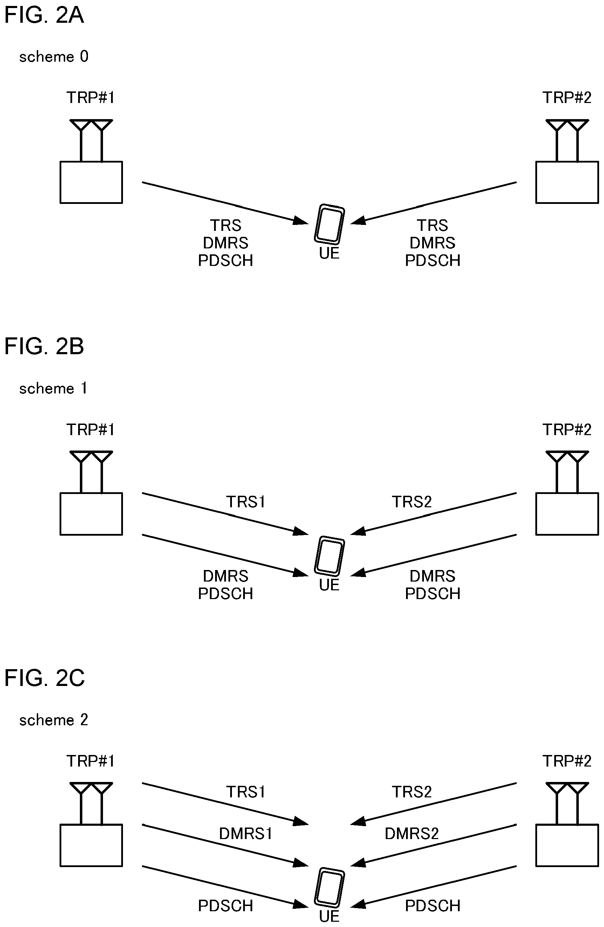

In scheme 0 shown in FIG. 2A, a tracking reference signal (TRS), a DMRS, and a PDSCH are transmitted in common for two TRPs (RRHs) (by using the same time and frequency resources) (normal SFN, transparent SFN, HST-SFN).

In scheme 0, the UE receives a DL channel/signal by using the equivalent of the single TRP, and thus a TCI state for the PDSCH is one TCI state.

Note that an RRC parameter for distinguish between transmission using the single TRP and transmission using the SFN is defined in Rel. 16. The UE may, when reporting corresponding UE capability information, distinguish, on the basis of the RRC parameter, between reception of the DL channel/signal with the single TRP and reception of the PDSCH with assumption of the SFN. On the other hand, the UE may perform transmission/reception using the SFN by assuming the single TRP.

In scheme 1 shown in FIG. 2B, the TRS is transmitted in a TRP-specific manner (by using a time/frequency resource varying depending on a TRP). In this example, TRS 1 is transmitted from TRP #1, and TRS 2 is transmitted from TRP #2.

In scheme 1, the UE receives a DL channel/signal from each TRP by using a TRS from each TRP, and thus TCI states for the PDSCH are two TCI states.

In scheme 2 shown in FIG. 2C, the TRS and the DMRS are transmitted in a TRP-specific manner. In this example, TRS 1 and DMRS 1 are transmitted from TRP #1, and TRS 2 and DMRS 2 are transmitted from TRP #2. Scheme 1 and scheme 2 can further suppress a quick change of a Doppler shift and can estimate/compensate the Doppler shift more appropriately, as compared to scheme 0. The DMRS in scheme 2 increases more than the DMRS in scheme 1, and thus maximum throughput in scheme 2 is lower than that in scheme 1.

In scheme 0, the UE performs switching between the single TRP and the SFN on the basis of higher layer signaling (RRC information element/MAC CE).

The UE may perform switching between scheme 1/scheme 2/NW pre-compensation scheme on the basis of the higher layer signaling (RRC information element/MAC CE).

In scheme 1, two TRS resources are configured for respective a direction of travel of the HST and the opposite direction.

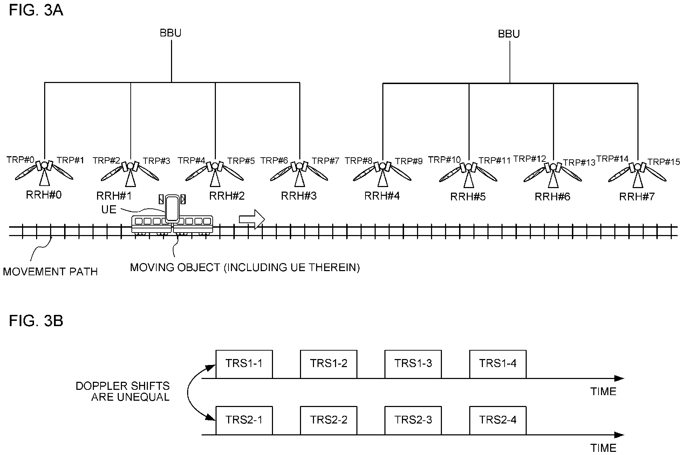

In an example shown in FIG. 3A, TRPs (TRPs #0, #2, ...) to transmit DL signals towards the opposite direction of the HST transmit a first TRS (TRS arriving from in front of the HST) in identical time and frequency resources (SFN). TRPs (TRPs #1, #3, ...) to transmit DL signals towards the direction of travel of the HST transmit a second TRS (TRS arriving from behind the HST) in identical time and frequency resources (SFN). The first TRS and the second TRS may be transmitted/received by using different frequency resources.

In an example shown in FIG. 3B, TRS 1-1 to TRS 1-4 are transmitted as the first TRS, and TRS 2-1 to TRS 2-4 are transmitted as the second TRS.

Considering beam management, the first TRS is transmitted by using 64 beams and 64 time resources, and the second TRS is transmitted by using 64 beams and 64 time resources. It is conceivable that a beam of the first TRS and a beam of the second TRS are equal to each other (QCL type D RSs are equal to each other). Multiplexing the first TRS and the second TRS in identical time resources and different frequency resources can enhance resource use efficiency.

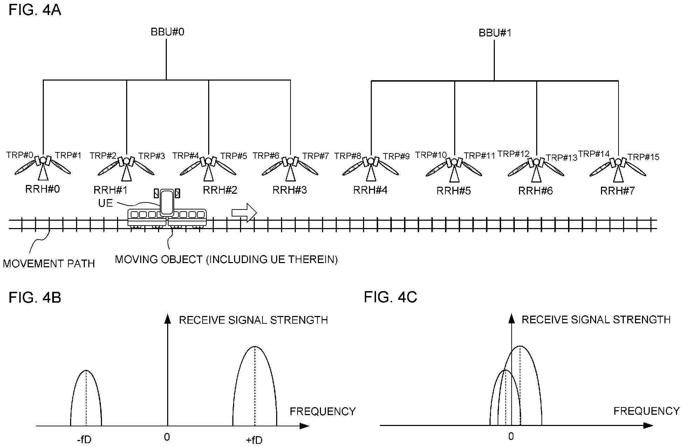

In an example shown in FIG. 4A, RRH #0 to RRH #7 are arranged along a movement path of the HST. RRH #0 to RRH #3 and RRH #4 to RRH #7 are connected to base band unit (BBU) #0 and BBU #1, respectively. Each RRH is a bi-directional RRH, and forms beams towards both the direction of travel and the opposite direction on the movement path by using each transmission/reception point (TRP).

In a received signal in an example shown in FIG. 4B (single TRP (SFN)/scheme 1), when the UE receives a signal/channel transmitted from TRP #2n-1 (n is an integer being 0 or more) (beam in the direction of travel of the HST, beam from behind the UE), a minus Doppler shift (in this example, -fD) occurs. Also, when the UE receives a signal/channel transmitted from TRP #2n (n is an integer being 0 or more) (beam in a direction opposite to the direction of travel of the HST, beam from in front of the UE), a plus Doppler shift (in this example, +fD) occurs.

For Rel. 17 (or later versions), Doppler shift compensation (which may be referred to as Doppler compensation, pre-Doppler compensation (Doppler pre-Compensation), or a network (NW) pre-compensation scheme (HST NW pre-compensation scheme)) that is performed in downlink (DL) signal/channel transmission from a TRP to a UE in an HST is under study. The TRP performs Doppler compensation beforehand when performing DL signal/channel transmission to the UE, thereby allowing an impact of a Doppler shift in DL signal/channel reception in the UE to be reduced. In the present disclosure, the NW pre-compensation scheme may be a combination of scheme 1 and Doppler shift pre-compensation by the base station.

For Rel. 17 (or later versions), a case that a TRS from each TRP is transmitted without performing Doppler compensation for the TRS and that a PDSCH from each TRP is transmitted by performing Doppler compensation for the PDSCH is under study.

In the NW pre-compensation scheme, a TRP to form a beam towards the direction of travel on the movement path and a TRP to form a beam towards the direction opposite to the direction of travel on the movement path perform DL signal/channel transmission to the UE in the HST after performing Doppler compensation. In this example, TRP #2n-1 performs positive Doppler compensation, and TRP #2n performs negative Doppler compensation, thereby reducing an impact of a Doppler shift in signal/channel reception by the UE (FIG. 4C).

Note that in a situation shown in FIG. 4C, the UE receives a DL channel/signal from each TRP by using a TRS from each TRP, and thus TCI states for the PDSCH may be two TCI states.

Furthermore, for Rel. 17 (or later versions), dynamic switching between the single TRP and the SFN with a TCI field (TCI state field) is under study. For example, one or two TCI states are configured/indicated in each TCI codepoint (code point of the TCI field, DCI codepoint) by using an RRC information element/MAC CE (for example, Enhanced TCI States Activation/Deactivation for UE-specific PDSCH MAC CE)/DCI (TCI field). The UE may judge that a PDSCH from the single TRP is received when one TCI state is configured/indicated. The UE may judge that a PDSCH from the SFN using multiple TRPs is received when two TCI states are configured/indicated.

### (Analysis)

For Rel. 17 (or later versions), support for a pre-Doppler compensation scheme in a specific frequency range (for example, FR 1) is under study. Specifically, whether DL RS-based Doppler reporting by the UE is supported is under study.

For Doppler compensation performed by a NW (for example, the base station) side, the NW needs to identify information related to the Doppler compensation (for example, a Doppler shift/Doppler spread).

However, a method for Doppler estimation for the information related to the Doppler compensation has not been fully studied. For example, for the Doppler estimation, whether the UE performs and reports Doppler estimation or the NW performs Doppler estimation has not been fully studied. Unless this study has been fully performed, the UE fails to appropriately perform Doppler compensation or fails to appropriately perform reception of a DL signal/channel to which Doppler compensation is applied, and communication performance degradation, such as throughput reduction, may occur.

Thus, the inventors of the present invention came up with the idea of an appropriate method for controlling Doppler compensation.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, a sequence, a list, a set, a group, a cluster, a subset, and the like may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), an RRC message, and configuration may be interchangeably interpreted.

The MAC signaling may use, for example, a MAC control element (MAC CE), a MAC Protocol Data Unit (PDU), or the like. In the present disclosure, a MAC CE, an update command, and an activation/deactivation command may be interchangeably interpreted.

The broadcast information may be, for example, a master information block (MIB), a system information block (SIB), minimum system information (Remaining Minimum System Information (RMSI), SIB1), other system information (OSI), or the like.

In the present disclosure, a beam, a spatial domain filter, a spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state/QCL assumption, an RS of QCL type A in a TCI state/QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a DL-RS source, an SSB, a CSI-RS, and an SRS may be interchangeably interpreted.

In the present disclosure, a panel, an Uplink (UL) transmission entity, a TRP, a spatial relation, a control resource set (CORESET), a PDSCH, a codeword, a base station, an antenna port for a certain signal (for example, a demodulation reference signal (DMRS) port), an antenna port group for a certain signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (multi-input muti-output (MIMO) layer, transmission layer, spatial layer) may be interchangeably interpreted. A panel Identifier (ID) and a panel may be interchangeably interpreted. In the present disclosure, a TRP ID and a TRP may be interchangeably interpreted.

The Panel may be related to at least one of a group index of an SSB/CSI-RS group, a group index of group-based beam report, and a group index of an SSB/CSI-RS group for group-based beam report.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, it may be assumed that a single PDCCH (DCI) is supported when multi-TRP uses an ideal backhaul. It may be assumed that multiple PDCCHs (DCI) are supported when multi-TRP uses a non-ideal backhaul.

Note that the ideal backhaul may be referred to as DMRS port group type 1, reference signal related group type 1, antenna port group type 1, CORESET pool type 1, and the like. The non-ideal backhaul may be referred to as DMRS port group type 2, reference signal related group type 2, antenna port group type 2, CORESET pool type 2, and the like. The names are not limited to these.

In the present disclosure, a single TRP, a single-TRP system, single-TRP transmission, and a single PDSCH may be interchangeably interpreted. In the present disclosure, multi-TRP, multi-TRP system, multi-TRP transmission, and multi-PDSCH may be interchangeably interpreted. In the present disclosure, single DCI, a single PDCCH, multi-TRP based on single DCI, and two TCI states in at least one TCI codepoint being activated may be interchangeably interpreted.

In the present disclosure, a single TRP, a channel using a single TRP, a channel using one TCI state/spatial relation, multi-TRP being not enabled by RRC/DCI, a plurality of TCI states/spatial relations being not enabled by RRC/DCI, and a CORESET pool index (CORESETPoolIndex) value with "1" being not configured for any CORESET and any codepoint of a TCI field being not mapped to two TCI states may be interchangeably interpreted.

In the present disclosure, multi-TRP, a channel using multi-TRP, a channel using a plurality of TCI states / spatial relations, multi-TRP being enabled by RRC/DCI, a plurality of TCI states / spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted. In the present disclosure, multi-TRP based on single DCI and at least one codepoint in a TCI field being mapped to two TCI states may be interchangeably interpreted.

In the present disclosure, TRP #1 (first TRP) may correspond to CORESET pool index = 0, or may correspond to a first TCI state out of two TCI states corresponding to one codepoint of a TCI field. TRP #2 (second TRP) TRP #1 (first TRP) may correspond to CORESET pool index = 1, or may correspond to a second TCI state out of the two TCI states corresponding to one codepoint of the TCI field.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

QCL in the present disclosure may be interchangeably interpreted as QCL type D.

In the present disclosure, "TCI state A is of the same QCL type D as that of TCI state B," "TCI state A and TCI state B are the same," "TCI state A is QCL type D with TCI state B," and the like may be interchangeably interpreted.

In the present disclosure, a DMRS, a DMRS port, and an antenna port may be interchangeably interpreted.

In the present disclosure, a CSI-RS, an NZP-CSI-RS, a periodic (P)-CSI-RS, a P-TRS, a semi-persistent (SP)-CSI-RS, an aperiodic (A)-CSI-RS, a TRS, a CSI-RS for tracking, a CSI-RS having TRS information (higher layer parameter "trs-Info"), an NZP CSI-RS resource in an NZP CSI-RS resource set having TRS information, an NZP-CSI-RS resource in an NZP-CSI-RS resource set constituted by a plurality of NZP-CSI-RS resources for the same antenna port, and a TRS resource may be interchangeably interpreted. In the present disclosure, a CSI-RS resource, a CSI-RS resource set, a CSI-RS resource group, and an information element (IE) may be interchangeably interpreted.

In the present disclosure, a codepoint of a DCI field 'Transmission Configuration Indication,' a TCI codepoint, a DCI codepoint, and a codepoint of a TCI field may be interchangeably interpreted.

In the present disclosure, a single TRP and an SFN may be interchangeably interpreted. In the present disclosure, an HST, an HST scheme, a scheme for high-speed movement, scheme 1, scheme 2, an NW pre-compensation scheme, HST scheme 1, HST scheme 2, and an HST NW pre-compensation scheme may be interchangeably interpreted.

In the present disclosure, a PDSCH/PDCCH using a single TRP may be interpreted as a single TRP-based PDSCH/PDCCH or a single TRP PDSCH/PDCCH. In the present disclosure, a PDSCH/PDCCH using an SFN may be interpreted as a PDSCH/PDCCH using multiple SFNs, a PDSCH/PDCCH based on an SFN, or an SFN PDSCH/PDCCH.

In the present disclosure, DL signal (PDSCH/PDCCH) reception using an SFN may mean reception using identical time/frequency resources and/or reception of identical data (PDSCHs)/control information (PDCCHs) from a plurality of transmission/reception points. The DL signal reception using the SFN may mean reception using identical time/frequency resources and/or reception of identical data/control information using a plurality of TCI states/spatial domain filters/beams/QCLs.

In the present disclosure, information related to Doppler compensation, Doppler compensation information, Doppler information, information related to a Doppler shift, a Doppler shift, a Doppler spread, a Doppler shift and Doppler spread, Doppler reporting, and Doppler report information may be interchangeably interpreted.

### (Radio Communication Method)

### <First Embodiment>

A UE may measure Doppler information. The UE may report/transmit the measured Doppler information to a NW.

In the present disclosure, measurement of the Doppler information may be referred to as Doppler measurement. In the present disclosure, the reported/transmitted Doppler information may be referred to as Doppler reporting.

The UE may perform the Doppler reporting for the measured Doppler information by using a specific UL signal/channel. For example, the UE may perform the Doppler reporting by using part or all of at least one of CSI (L1 CSI) and a MAC CE.

The UE may perform the Doppler measurement by using a specific DL RS. The specific DL RS may be, for example, at least one of a CSI-RS, a TRS, and an SSB. A resource of the specific DL RS may be configured/indicated for the UE by using higher layer signaling/physical layer signaling. The DL RS resource may be a periodic DL RS resource. The DL RS resource is limited to the periodic DL RS resource, thereby enabling long-term measurement/multiple times of measurement, and thus more accurate Doppler measurement can be performed.

In the present disclosure, the Doppler information may be at least one of a Doppler shift, a Doppler spread, a (maximum/average/median) Doppler frequency, and power/energy of each Doppler spread. The Doppler information may be at least one of a specific outage value of a cumulative distribution function for a Doppler frequency (for example, a specific percent value of the cumulative distribution function) and a specific outage value of a cumulative distribution function for a Doppler spread.

When the DL RS resource for the Doppler measurement is not configured for the UE, the UE may perform the Doppler measurement by using a DL RS resource determined in accordance with a specific method. As a TCI state for a PDSCH, up to two TCI states can be configured. The UE may perform measurement of a plurality of (for example, respective positive and negative) pieces of Doppler information by using a QCL source RS with each TCI state. In the present disclosure, the QCL source RS and an RS configured as a specific QCL type (for example, QCL type A) RS may be interchangeably interpreted.

The DL RS resource determined in accordance with the specific method may be a periodic DL RS resource. The DL RS resource is limited to the periodic DL RS resource, thereby enabling long-term measurement/multiple times of measurement, and thus more accurate Doppler measurement can be performed. In this case, the UE may assume that a QCL type A RS configured as the TCI state for the PDSCH is only a periodic DL RS. When the QCL type A RS configured as the TCI state for the PDSCH is aperiodic, the UE may determine another periodic DL RS in accordance with a specific method to perform the Doppler measurement. The specific method may be, for example, Doppler measurement using another periodic DL RS being in a QCL relationship with the aperiodic QCL type A RS.

For example, when TCI state #1 and TCI state #2 are configured for the PDSCH, the UE may measure Doppler information by using each of a QCL source RS with TCI state #1 and a QCL source RS with TCI state #2.

### <<Method for Reporting Doppler Information>>

The UE may report/transmit one or more pieces of Doppler information. The one or more pieces of Doppler information may include at least one of first Doppler information (for example, Doppler information in a positive direction) and second Doppler information (for example, Doppler information in a negative direction).

The UE may report the first Doppler information and the second Doppler information.

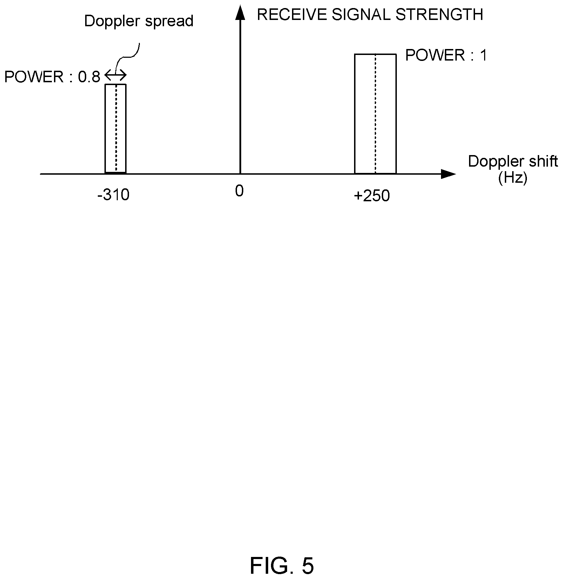

For example, the UE may, when reporting Doppler shifts as the pieces of Doppler information, report respective plus and minus Doppler shifts. For example, in a case shown in FIG. 5, the UE may report a first value (for example, -310 (Hz)) and a second value (for example, +250 (Hz)).

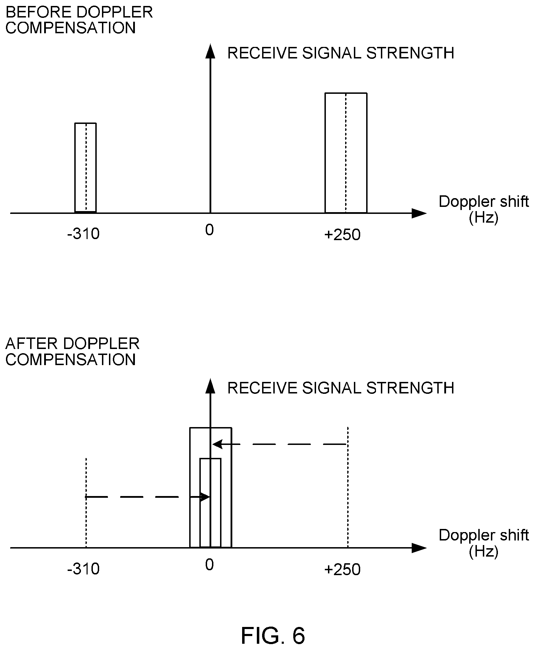

FIG. 6 is a diagram to show an example of Doppler compensation according to a first embodiment. In the example shown in FIG. 6, the UE reports respective ones of the Doppler information in the positive direction and the Doppler information in the negative direction. On the basis of the reported information, the NW performs -250 (Hz) compensation for a DL signal/channel (PDSCH) for which a beam is formed in a direction opposite to a direction of travel of the UE, performs +310 (Hz) compensation for a DL signal/channel (PDSCH) for which a beam is formed in the direction of travel of the UE, and transmits the respective DL signals/channels. The UE receives the DL signals/channels (PDSCHs) to which the Doppler compensation has been applied.

The UE may report/transmit Doppler information based on the Doppler information in the positive direction and the Doppler information in the negative direction.

The UE may compute/determine the Doppler information based on the Doppler information in the positive direction and the Doppler information in the negative direction as an average value of an absolute value of the Doppler information in the positive direction and an absolute value of the Doppler information in the negative direction.

The average value may be computed with an equivalent (simple) average. For example, in the case shown in FIG. 5, the UE may report (|-310| + |+250|) / 2 = 280 (Hz). When the equivalent average is used, a structure of the UE can be simplified, and it is possible to moderately perform Doppler compensation for a received signal from a plurality of TRPs.

The average value may be computed with a weighted average. The weighted average may be computed by using positive/negative Doppler power/energy. For example, in the case shown in FIG. 5, the UE may report (|-310| * 0.8 + |+250| * 1) / (0.8 + 1) = 276 (Hz). The weighted average using the power/energy enables Doppler compensation for a dominant TRP affecting a signal received by the UE, and thus improvement in characteristics can be expected.

The weighted average may be computed by using a Doppler spread. The weighted average using the Doppler spread can be expected to enhance an effect of the Doppler compensation.

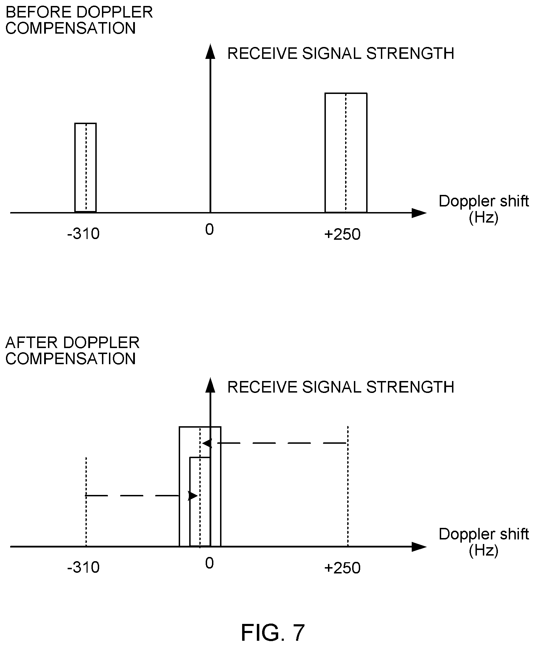

FIG. 7 is a diagram to show another example of the Doppler compensation according to the first embodiment. In the example shown in FIG. 7, the UE reports the average value (equivalent average, here, 280 (Hz)) of the absolute value of the Doppler information in the positive direction and the absolute value of the Doppler information in the negative direction. On the basis of the reported information, the NW performs -280 (Hz) compensation for a DL signal/channel (PDSCH) for which a beam is formed in a direction opposite to a direction of travel of the UE, performs +280 (Hz) compensation for a DL signal/channel (PDSCH) for which a beam is formed in the direction of travel of the UE, and transmits the respective DL signals/channels. The UE receives the DL signals/channels (PDSCHs) to which the Doppler compensation has been applied.

The UE may report/transmit the Doppler information in the positive direction or the Doppler information in the negative direction. Reporting of the Doppler information in the positive direction or the Doppler information in the negative direction may be configured/indicated for the UE by higher layer signaling/physical layer signaling.

The UE may always report the Doppler information in the positive direction. The UE may always report the Doppler information in the negative direction.

The UE may determine to perform reporting/transmission of the Doppler information in the positive direction or the Doppler information in the negative direction on the basis of a Doppler shift/power/energy.

For example, the UE may perform reporting/transmission of Doppler information corresponding to a higher (or lower) Doppler shift/power/energy, out of the pieces of Doppler information in the positive and negative directions. For example, in the case shown in FIG. 5, the UE may report 250 (Hz).

Note that a Doppler shift/Doppler spread/power/energy value in each drawing of the present disclosure is just an example, and is not limited to this.

According to the above first embodiment, Doppler reporting by the UE and Doppler compensation by the NW can be appropriately performed.

### <Second Embodiment>

In a second embodiment, a frequency band for performing Doppler reporting will be described.

The above-described first embodiment may be employed only in a specific frequency band.

For example, the above-described first embodiment may be employed only in a Frequency Division Duplex (FDD) band. In other words, the Doppler reporting may not be supported in a Time Division Duplex (TDD) band. This is because in the TDD band, a NW can obtain DL Doppler information by performing measurement of a UL RS.

Application of the above-described first embodiment may be reported to the NW as UE capability information for each BWP/each CC/each band/each band combination (plurality of bands)/each UE. For example, the UE can, when reporting application of the Doppler reporting for each band/each band combination (plurality of bands), report that the Doppler reporting is not supported in the FDD (TDD) band.

For example, the above-described first embodiment may be employed/operated in a case where application of the Doppler reporting is configured by a higher layer for each BWP/each CC/each band/each band combination (plurality of bands)/each UE. For example, when application of the Doppler reporting is configured for each band/each band combination (plurality of bands), the UE can be configured not to perform the Doppler reporting in the FDD (TDD) band, and configured to perform the Doppler reporting in the TDD (FDD) band. When the application of the Doppler reporting is configured for each BWP/each CC, the UE may control so as to perform the Doppler reporting only in a BWP/CC specified by the NW.

According to the above second embodiment, it is possible to appropriately determine a frequency band for performing Doppler reporting.

### <Third Embodiment>

It is conceivable that Doppler information varies for each beam/TCI state/QCL/spatial domain filter applied to a DL signal/channel for performing Doppler measurement. When the applied beam/TCI state/QCL/spatial domain filter varies, a channel propagation path varies, and thus it is conceivable that the Doppler information also varies.

The Doppler information to be reported will be described below.

### <<Embodiment 3-1>>

A UE may report Doppler information for each beam/TCI state/QCL/spatial domain filter.

For example, the UE may report the Doppler information for each beam (RS) by using beam reporting. The beam reporting may be, for example, at least one of L1 RSRP-based beam reporting (L1 RSRP Beam reporting) and L1 SINR-based beam reporting (L1 SINR Beam reporting).

The reporting of the Doppler information may be performed when a specific higher layer parameter is set to a specific value (condition).

For example, the UE may determine to perform the reporting of the Doppler information when a higher layer parameter related to the reporting of the Doppler information is configured or when a higher layer parameter related to the reporting of the Doppler information is set to "enabled."

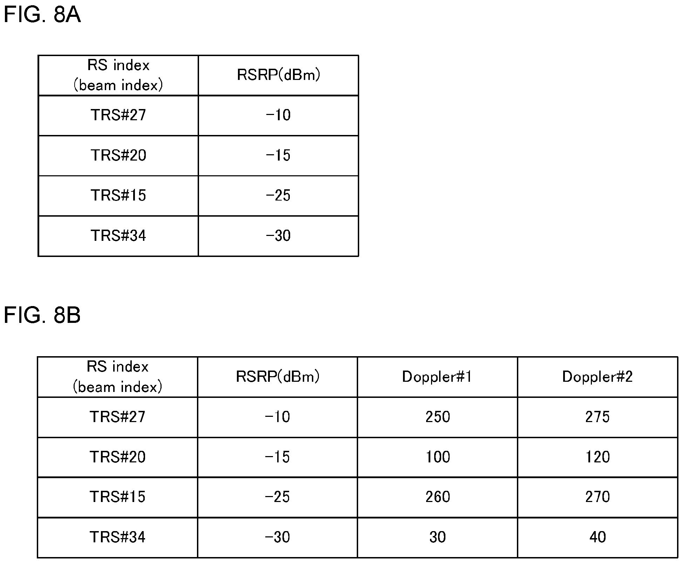

FIGS. 8A and 8B are each a diagram to show an example of the Doppler information according to Embodiment 3-1. FIG. 8A shows an example of contents of the L1 RSRP/SINR Beam reporting in a case where the higher layer parameter related to the reporting of the Doppler information is not set to "enabled." When the higher layer parameter related to the reporting of the Doppler information is not set to "enabled," the UE does not include the Doppler information in the L1 RSRP/SINR Beam reporting to perform beam reporting.

Note that the beam reporting includes information (RS/beam index, RSRP/SINR value) related to a beam with the best received power/reception quality (in FIG. 8A, TRS #27) and information related to beams with the second to N-th (here, N = 4) received power/reception quality (in FIG. 8A, TRS #20, TRS #15, and TRS #34). Typically, the information (RSRP/SINR values) related to the beams with the second to N-th received power/reception quality is reported with a difference from the information (RSRP/SINR value) related to the beam with the best received power/reception quality, but is not limited to this.

FIG. 8B shows an example of contents of the L1 RSRP/SINR Beam reporting in a case where the higher layer parameter related to the reporting of the Doppler information is set to "enabled." When the higher layer parameter related to the reporting of the Doppler information is set to "enabled," the UE includes, in the L1 RSRP/SINR Beam reporting, Doppler information corresponding to respective RS indices (Doppler #1 (for example, a first Doppler shift) and Doppler #2 (for example, a second Doppler shift)) to perform beam reporting.

Note that examples shown in respective drawings in a third embodiment show Doppler reporting including information related to a first Doppler shift (for example, a plus Doppler shift) and information related to a second Doppler shift (for example, a minus Doppler shift), but are not limited to this. The Doppler reporting may include one Doppler shift (corresponding to each RS index/each TCI state), or may include a Doppler spread in addition to the Doppler shift. When the Doppler reporting includes the Doppler spread, Doppler compensation can be performed more accurately for an RS index (beam) with a lower Doppler spread, and thus a NW can perform Doppler compensation more appropriately than a case where the Doppler reporting does not include the Doppler spread.

### <<Embodiment 3-2>>

The UE may report Doppler information for each beam/TCI state/QCL/spatial domain filter for a DL signal/channel (for example, a PDSCH).

For example, the UE may report Doppler information corresponding to a plurality of (for example, up to eight) respective active TCI states configured for the PDSCH.

The reporting of the Doppler information may be performed when a specific higher layer parameter is set to a specific value (condition).

For example, the UE may determine to perform the reporting of the Doppler information when a higher layer parameter related to the reporting of the Doppler information is configured or when a higher layer parameter related to the reporting of the Doppler information is set to "enabled."

The UE may perform the reporting of the Doppler information by using UCI. A priority of the UCI may be determined on the basis of a specific rule. The priority of the UCI may be configured to be lower than specific UCI (for example, a HARQ-ACK/SR) and to be higher than UCI other than the specific UCI. The priority of the UCI may be configured to be higher/lower than other UCI. The priority of the UCI may be configured to be equal to specific UCI

### (HARQ-ACK/SR/CSI) .

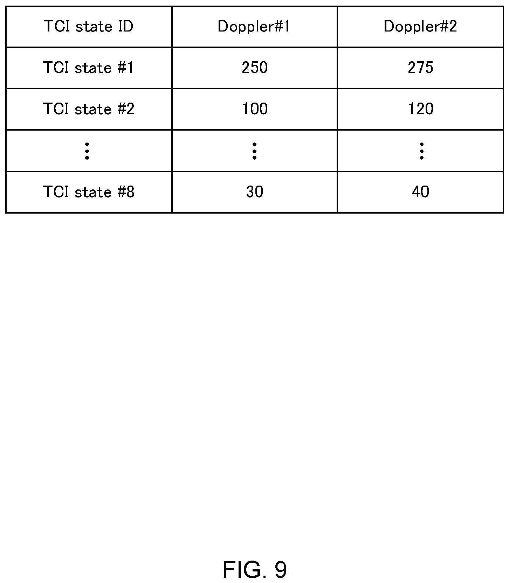

FIG. 9 is a diagram to show an example of the Doppler information according to Embodiment 3-2. In the example shown in FIG. 9, the Doppler information reported by the UE includes respective TCI state IDs and Doppler information corresponding to the TCI state IDs (Doppler #1 (for example, a first Doppler shift) and Doppler #2 (for example, a second Doppler shift)).

### <<Embodiment 3-3>>

The UE may report one piece of Doppler information for a plurality of (for example, all) beams/TCI states/QCLs/spatial domain filters for an active DL signal/channel (for example, a PDSCH).

For example, the UE may determine one piece of Doppler information on the basis of Doppler information corresponding to a plurality of (for example, up to eight) respective active TCI states configured for the PDSCH, and may report the one piece of Doppler information.

For example, the UE may determine the one piece of Doppler information on the basis of an average value of the Doppler information corresponding to the plurality of respective active TCI states configured for the PDSCH. As described in the first embodiment, the average value may be an equivalent average, or may be a weighted average.

For example, the UE may determine/select, out of the Doppler information corresponding to the plurality of respective active TCI states configured for the PDSCH, one piece of Doppler information on the basis of a Doppler spread value (power/energy).

The reporting of the Doppler information may be performed when a specific higher layer parameter is set to a specific value (condition).

For example, the UE may determine to perform the reporting of the Doppler information when a higher layer parameter related to the reporting of the Doppler information is configured or when a higher layer parameter related to the reporting of the Doppler information is set to "enabled."

The UE may perform the reporting of the Doppler information by using UCI. A priority of the UCI may be determined on the basis of a specific rule. The priority of the UCI may be configured to be lower than specific UCI (for example, a HARQ-ACK/SR) and to be higher than UCI other than the specific UCI. The priority of the UCI may be configured to be higher/lower than other UCI. The priority of the UCI may be configured to be equal to specific UCI (HARQ-ACK/SR/CSI) .

According to Embodiment 3-3, the number of bits of information (for example, UCI) for Doppler reporting can be reduced as compared to Embodiment 3-1 and Embodiment 3-2 described above. This is particularly effective for a case where a difference between Doppler information for each TCI state is small. The Doppler information depends on a movement speed of the UE, and thus Doppler compensation can be performed effectively even with the Doppler reporting described in Embodiment 3-3.

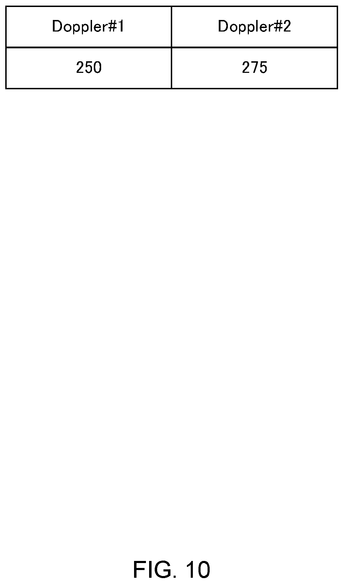

FIG. 10 is a diagram to show an example of the Doppler information according to Embodiment 3-3. In the example shown in FIG. 10, the Doppler information reported by the UE includes Doppler information corresponding to a TCI state ID (Doppler #1 (for example, a first Doppler shift) and Doppler #2 (for example, a second Doppler shift)), the Doppler information being determined on the basis of Doppler information corresponding to a plurality of (for example, all) respective beams/TCI states/QCLs/spatial domain filters.

According to the above third embodiment, Doppler reporting by the UE and Doppler compensation by the NW can be appropriately performed.

### <Other Embodiments>

A higher layer parameter (RRC IE)/UE capability corresponding to a function (characteristic, feature) in at least one of a plurality of embodiments described above may be defined. The UE capability may indicate that this function is supported.

A UE for which the higher layer parameter (for enabling the function) corresponding to the function has been configured may perform the function. "A case that a UE for which the higher layer parameter corresponding to the function has not been configured does not perform the function (for example, follows Rel. 15/16)" may be defined.

A UE that has reported the UE capability indicating that the function is supported may perform the function. "A case that a UE that has not reported the UE capability indicating that the function is supported does not perform the function (for example, follows Rel. 15/16)" may be defined.

When a UE has reported the UE capability indicating that the function is supported, and the higher layer parameter corresponding to the function has been configured for the UE, the UE may perform the function. "A case that when a UE does not report the UE capability indicating that the function is supported or when the higher layer parameter corresponding to the function is not configured for the UE, the UE does not perform the function (for example, follows Rel. 15/16)" may be defined.

The UE capability may indicate whether a UE supports this function.

The UE capability may indicate whether to support Doppler compensation (Doppler compensation scheme). The UE capability may indicate a maximum compensable Doppler shift/maximum compensable Doppler frequency.

The UE capability may indicate whether to support reporting of Doppler information (Doppler reporting).

The UE capability may indicate the number of reports of Doppler information. The number of reports of Doppler information may indicate either or both Doppler information in a positive direction and Doppler information in a negative direction.

The UE capability may indicate how many pieces of Doppler information for each TCI state/beam can be reported.

The UE capability information may indicate whether to support operation in each embodiment described above.

According to embodiments described above, the UE can achieve the above-described function while maintaining compatibility with existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

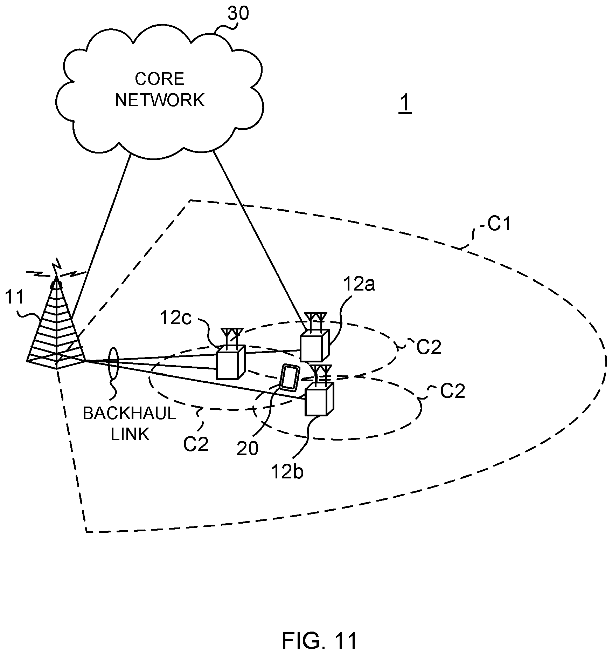

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

By means of the PUCCH/PUSCH, uplink control information (UCI) including at least one of channel state information (CSI), transmission confirmation information (which may be referred to as, for example, a Hybrid Automatic Repeat reQuest ACKnowledgement (HARQ-ACK), an ACK/NACK, or the like), and a scheduling request (SR) may be communicated. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

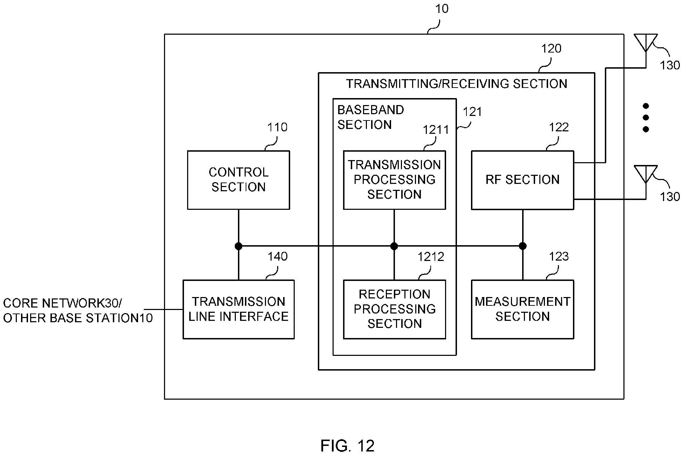

FIG. 12 is a diagram to show an example of a structure of a base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may control transmission of a downlink reference signal transmitted from a plurality of transmission/reception points. The transmitting/receiving section 120 may receive information related to Doppler reporting, the information being determined on the basis of at least one of first information related to a plus Doppler shift and second information related to a minus Doppler shift, the first and second information being obtained from the downlink reference signal (first embodiment).

### (User Terminal)

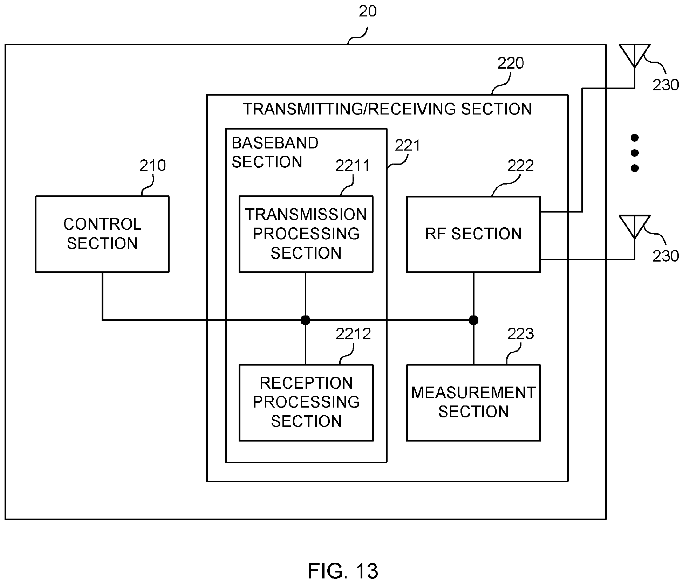

FIG. 13 is a diagram to show an example of a structure of a user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a downlink reference signal transmitted from a plurality of transmission/reception points. The control section 210 may determine information related to Doppler reporting on the basis of at least one of first information related to a plus Doppler shift and second information related to a minus Doppler shift, the first and second information being obtained from the downlink reference signal. The transmitting/receiving section 220 may transmit the information related to the Doppler reporting (first embodiment).

The Doppler reporting may be performed only in a Frequency Division Duplex (FDD) band (second embodiment).

The information related to the Doppler reporting may be included in beam reporting (third embodiment).

The information related to the Doppler reporting may be included in uplink control information (third embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

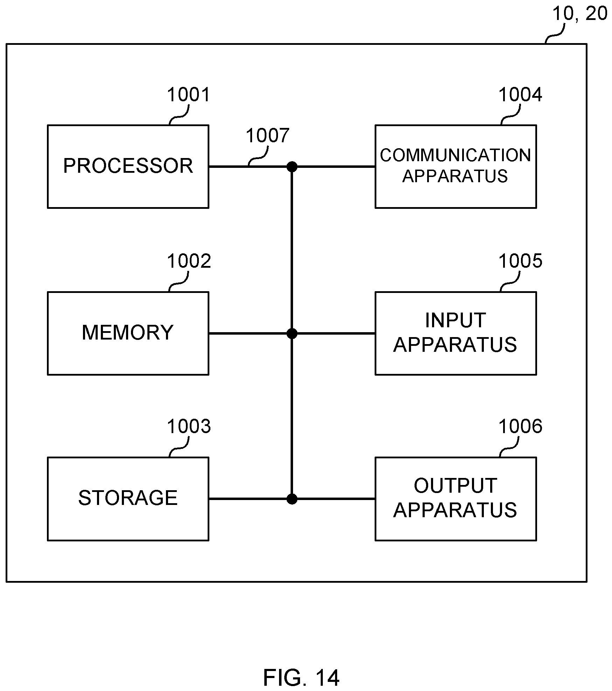

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a downlink reference signal transmitted from a plurality of transmission/reception points;
a control section that determines information related to Doppler reporting on the basis of at least one of first information related to a plus Doppler shift and second information related to a minus Doppler shift, the first and second information being obtained from the downlink reference signal; and
a transmitting section that transmits the information related to the Doppler reporting.

2. The terminal according to claim 1, wherein
the Doppler reporting is performed only in a Frequency Division Duplex (FDD) band.

3. The terminal according to claim 1, wherein
the information related to the Doppler reporting is included in beam reporting.

4. The terminal according to claim 1, wherein
the information related to the Doppler reporting is included in uplink control information.

5. A radio communication method for a terminal, the radio communication method comprising:
receiving a downlink reference signal transmitted from a plurality of transmission/reception points;
determining information related to Doppler reporting on the basis of at least one of first information related to a plus Doppler shift and second information related to a minus Doppler shift, the first and second information being obtained from the downlink reference signal; and
transmitting the information related to the Doppler reporting.

6. A base station comprising:
a control section that controls transmission of a downlink reference signal transmitted from a plurality of transmission/reception points; and
a receiving section that receives information related to Doppler reporting, the information being determined on the basis of at least one of first information related to a plus Doppler shift and second information related to a minus Doppler shift, the first and second information being obtained from the downlink reference signal.
